# EUROPEAN PATENT APPLICATION

(11) **EP 1 437 657 A2**
(43) Date of publication of application: **14.07.2004**
(21) Application number: 03256999.8
(22) Date of filing: 05.11.2003
(51) Int. Cl.: G06F 9/50

(54) **System and method for management of software applications**

(30) Priority: 05.11.2002 US 288241
(71) Applicant: Sun Microsystems, Inc., Santa Clara, California 95054 (US)
(72) Inventor: Becker, Brian Eric, Colorado Springs Colorado 80918 (US); Mayer, Alain Jules, San Francisco California 9414 (US); Schroepfer, Michael Todd, Mountain View California 94040 (US)
(74) Representative: Meldrum, David James

(57) **Abstract**

A system and method for the management of applications on one or more computers. The management system can manage the applications based on the state of each resource belonging to the application. One aspect of the management system includes a master server and a plurality of agents. The master server allows resources to be selected from among a plurality of resources that are already deployed and combine the resources together to form an application. The master server can then generate instructions for capturing the selected resources, along with their corresponding resource states, and combining the captured resources and resource states into an application package. Another aspect of the management system can associate management procedures with the application based on the resource type of each of the resources making up the application. The management procedures can thus be executed to manage the application based on the states of each of its resources.

## Description

### COPYRIGHT NOTICE

A portion of the disclosure of this patent document contains material which is subject to copyright protection. The copyright owner has no objection to the facsimile reproduction by anyone of the patent document or the patent disclosure, as it appears in the Patent and Trademark Office patent file or records, but otherwise reserves all copyright rights whatsoever.

### FIELD

The present invention relates generally to computers and more particularly, but not exclusively, to a system and method for management of software applications on networked computers.

### BACKGROUND

A networked computer is a computer connected to a communications network (e.g., an Internet Protocol (IP) network). The computer can function as a server to offer functionality to client computers that are connected to the server over the communications network. The functionality provided by the server is determined by one or more applications (e.g., software programs), which are installed and running on the server. An application typically includes, among other things, binary (e.g., executable) files, and configuration and registration settings. These files and settings may reside in one or more directories on the server.

Before an application can be made available to a client computer, a system administrator (or a group of system administrators in a larger enterprise) needs to deploy the application onto the server (e.g., an enterprise server). The system administrator is usually responsible for managing application software on all the servers, in such a way that the servers cooperatively offer a desired functionality for a given business objective. Given the dynamic nature of business objectives, applications may frequently need to be deployed, uninstalled, or upgraded (i.e., uninstalling an old version and deploying a new version). Further, applications may need to be analyzed, e.g., in the case of a malfunction.

Due to the complexities involved in the management processes and the variety of configuration and registration settings among the different applications, the management of applications can be a time-consuming task, requiring the system administrator to have knowledge regarding each application. Furthermore, any small error, for example, in the setting of a configuration file of a single application on a single server, can invalidate the enforcement of the desired functionality of the enterprise as a whole. Configuration errors can go undetected for a long time. Traditional system management software typically will not generate any alerts since all the servers and applications are up and running, and thus are not generating an event to which the system management software can react.

As apparent from the above-described deficiencies with the manual management of applications, a need exists for a system and method for unifying and automating the management of the applications on one or more servers in, for example, an enterprise data center, while ensuring that the management operation is executed in such a way that, as a whole, all the servers realize the desired business functionality.

### SUMMARY

One aspect of the present invention is directed to a system and method for the management of software applications on one or more managed server machines. The management system enables the management of applications to be simplified by unifying the management of the state of the deployed application (i.e., the state of each resource belonging to the application). For example, the state of an application previously deployed on a source server machine can be captured and used to deploy the same application to one or more target server machines, resulting in a deployment state on the target server machine(s) that is the same as or similar to the previously captured deployment state (on the source server machine). Other management procedures, such as analysis and un-installation can also be effectively performed using the deployment state. For example, a deployed application can be analyzed with respect to its state of deployment. Additionally, a deployed application can be uninstalled or removed from the server machine using its deployment state.

According to one aspect of the present invention, the application management system includes a master server and a plurality of agents, each agent residing on a managed server machine. The master server allows a user (e.g., a system administrator or another software program) to select resources from among a plurality of resources already deployed on the managed server machines and combine the resources together to form an application. The resources can be selected from one or more of the managed server machines (which are known as source server machines in this case). The master server generates instructions for capturing the selected resources, along with their corresponding resource states, and combines the captured resources and resource states into an application package.

According to another aspect of the present invention, the application management system can associate management procedures with the application, based on the resource type of each of the resources making up the application. The management procedures can thus be executed to manage the application based on the states of each of its resources.

The application management system can, in one embodiment, be implemented as a sequence of computer program instructions that can be programmed into one or more computers (or server machines). Alternatively, the application management system can be implemented in hardware (e.g., special purpose hardware such as a programmable logic device, or a general purpose computer running specific software) or as a sequence of instructions that are stored on computer-readable media (e.g., a disk) as an article of manufacture.

### BRIEF DESCRIPTION OF THE DRAWINGS

A more complete understanding of aspects of the present invention and their advantages will be readily apparent from the following Detailed Description of the Preferred Embodiments taken in conjunction with the accompanying drawings. Throughout the accompanying drawings, like parts are designated by like reference numbers and in which:
Fig. 1 is a block diagram illustrating an embodiment of an application management system in accordance with the present invention;
Fig. 2 is a schematic illustration of a computer network in which an application can be managed in accordance with an embodiment of the present invention;
Fig. 3 is a flow diagram illustrating an embodiment of a process for creating applications in accordance with the present invention;
Fig. 4 is a flow diagram illustrating an embodiment of a process for managing applications in accordance with the present invention;
Fig. 5 is a block diagram illustrating a plurality of internal modules of an embodiment of a master server in accordance with the present invention; and
Fig. 6 is a block diagram illustrating a plurality of internal modules of an embodiment of an agent in accordance with the present invention.

### DETAILED DESCRIPTION OF THE PREFERRED EMBODIMENTS

An application is a collection of resources (features) that are designed to operate together to perform a specific function (or group of related functions). An application (e.g., a software application) can be acquired as a unit from a software vendor or can be created in-house by a software development group. An application package (e.g., software package) is a file (typically an archive file) or a set of files that contains all the data (e.g., executable code, content, and configuration information) for an application.

A resource is a feature, one or more of which can be combined together to function as an application. A resource can be a single file, or a collection of files of diverse file types, including executable code, configuration files, and graphics files for user interfaces. Examples of resources include: (1) a directory containing web content, such as HTML-based text, Active Server Pages (ASP), pictures in various formats (e.g., GIF, JPEG), etc.; (2) a Dynamic Link Library (DLL), which can contain one or more Component Object Model (COM) components; and (3) a Web Archive (WAR) file containing, for example, Java 2 Enterprise Edition (J2EE) application code. Each resource has a particular resource type associated with it, and can thus be managed based on its resource type. A resource type is a name of a resource, which is selected from a defined set of names (e.g., COM_PLUS, WAR_WebLogic, IIS_Web_Site). For example, a resource containing COM+ components can have a resource type COM_PLUS. Thus, a resource type is an attribute of a resource that uniquely determines its kind.

A server machine is any networked computer that offers the functionality of applications installed thereon to other computers (e.g., client computers) that are connected to the server machine over a communications network. A particular computer can function, for example, as a server machine with respect to a first application, (e.g., when it is offering the functionality of the first application to other computers) and as a client computer with respect to a second application (when it is using the functionality of the second application provided by another computer).

Each resource deployed to a server machine has a resource state associated therewith. The state of a deployed resource (resource state) typically includes the configuration and registration settings of the resource as deployed on the particular server machine.

Each application deployed to a server machine has an application state associated therewith. The state of a deployed application (application state) is a collection of the states of each of the resources belonging to the application.

Application management is a term that encompasses a number of processes, including: (1) deployment, a process wherein an application (and its corresponding functionality) is added to a server machine, (2) un-installation, a process wherein the application (and its corresponding functionality) is removed from a server machine, (3) analysis, a process wherein configuration and registration differences among a number of server machines having the same deployed application are identified, and (4) discovery, a process for determining the server machines on which a particular application or resource is deployed. Other application management procedures can include, for example, upgrade, rollback, and monitoring.

Application deployment typically involves transferring all the resources forming the application (application resources) onto the server machine. The resources are typically placed into pre-defined directories. Configuration and registration settings for each of the resources are populated with values. Depending on the resource, these settings can be in database-like structures, files of various formats (e.g., XML, or an application-specific format), and/or registration type structures (e.g., Windows registry). The configuration of each of the resources may depend on many different aspects, such as the type of server, the IP address or addresses of the server, the subnet in which the server is located, the VLAN segment to which the server belongs, other software already installed on the server, the role of the server within the enterprise, and the underlying operating system (OS) or hardware of the server.

The environment of the server may need to be configured for the application software to become operational. For example, a server registry may need to be changed depending on the type of resources that is installed on the server. Further, a number of conditions should be checked to ensure that each of the resources can run on the selected server, for example, available memory, architecture, and other previously installed software. Once configured, the application software can be started, i.e., have its executables brought into a running state.

Application un-installation typically includes the process of stopping the application software so that it is no longer in a running state, removing all of its resources from the server machine, and removing all of the configuration and registration settings that were created during the deployment process.

Application configuration analysis involves comparing the configuration and registration settings among two or more server machines on which the application is currently deployed. The comparison can encompass all of the configuration and registration settings associated with each of the server machines. Alternatively, the comparison may be limited to the configuration and registration settings that are impacted by the particular application resources. The differences in the configuration and registration settings can be presented as output to the system administrator or to another application management function.

Application discovery is a process of discovering, on a given set of server machines, all of the server machines on which the application is currently deployed. The identity of each server can be presented as output, along with the precise version of the deployed application.

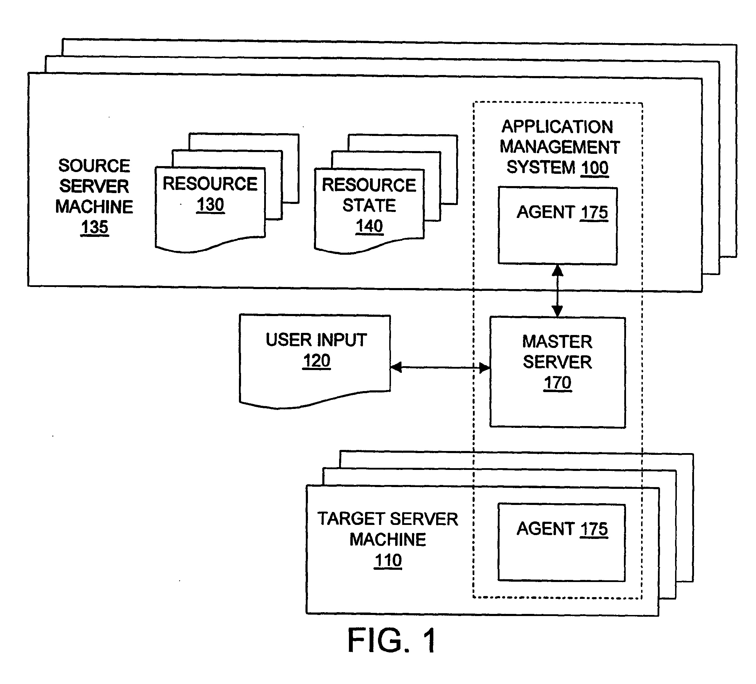

Fig. 1 illustrates a block diagram of an embodiment of an application management system 100 of the present invention. The application management system 100 is adapted for automating the management of an application on one or more target server machines 110 selected from a plurality of target server machines. The application management system 100 enables the workflow to be the same (or similar) for every resource, despite any differences in the state of each resource or its resource type.

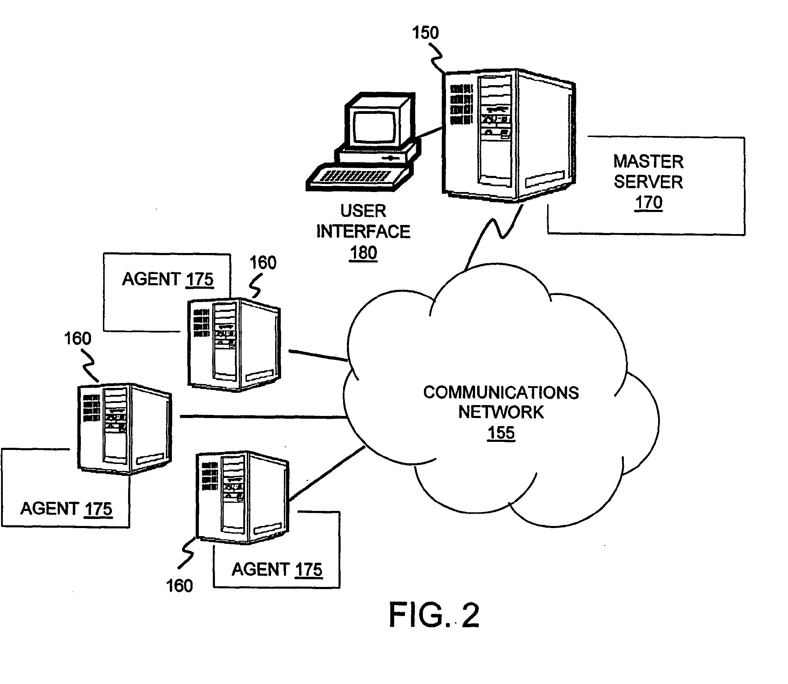

The application management system 100 receives a user input 120 (e.g., via user interface 180 shown in Fig. 2) selecting one or more resources 130 that is already deployed on a source server machine 135 (sometimes referred to as a "Gold Server"). The selection of the resources 130 can, optionally, include an indication of the resource type. The selected resources 130 can be combined together to function as an application. In one embodiment, the resources 130 can be selected from one or more source server machines 135. For example, a first resource can be selected from a first source server machine, while a second resource can be selected from a second source server machine. In the case where a particular resource 130 is available on a number of source server machines 135, a particular source server machine 135 can be selected to provide the resource 130. Further, a particular server machine can function as a source server machine 135 in one instance (i.e., when it is supplying a resource already installed thereon to the application management system 100 for deployment to another server machine), and as a target server machine 110 in another instance (i.e., when it is the intended target of a resource to be installed thereon).

The application management system 100 generates instructions for capturing each of the selected resources 130 on the source server machines 135, along with a resource state 140 corresponding to each of the selected resources 130. The selected resources 130 and corresponding resource states 140 can be combined (e.g., with installation instructions, etc.) to form an application package (software package).

The application management system 100 associates management procedures with the application based on the resource type of each of the selected resources 130. The application management system 100 thus allows a user (e.g., a system administrator or another software program) to execute the management procedures to manage the target server machines 110. The management procedures can advantageously be executed from a central location, such as a machine used by a system administrator or other operations personnel. For each application, the application management system 100 allows the user to select from a set of automated management procedures, including deployment, un-installation, analysis, and discovery.

During deployment, the selected resources 130 are installed on one or more of the target server machines 110. The configuration settings of both the application and the selected target server machine 110 can be set according to the deployment management procedure. The deployment management procedure, in turn obtains the necessary configuration and registration setting information from the resource state 140 corresponding to each of the selected resources 130.

The un-installation management procedure causes all the resources that were installed during the deployment process to be removed from the target server machine 110. Further, all the configuration and registration settings associated with the application (i.e, the application state) that were created during the deployment process are undone.

The analysis management procedure analyzes the configuration and registration settings (i.e., the application state) of the application on the target server machine 110 and compares it with the settings (or application state) of the same application on another server machine. The analysis management procedure can also compare the current settings of the application on the target server machine 110 with the settings that were active on the same target server machine 110 at a previous point in time.

The application discovery management procedure determines whether the application is already deployed on one or more server machines. If so, the application discovery management procedure can output the identity of the particular server machines, along with the current application state on each of the server machines.

As a result, operations personnel can manage applications by simply selecting management procedures (certain ones of which are made available according to the resource type of each resource of an application) to manage the specific resource states. By selecting from the available management procedures, the operations personnel can thus be assured of the accuracy of the management operations. Also, by invoking a specific management procedure across a number of target server machines 110, or even across an entire enterprise network, operations personnel can be assured that the application is managed consistently. For example, each deployment process can be carried out in the same way. Analysis, un-installation, and other procedures (such as rollback) can be carried out based on the deployment procedure (i.e., the application state resulting from the deployment procedure is used as a starting point for these management procedures).

Fig. 2 schematically illustrates a computer network in which an application can be managed in accordance with an embodiment of the present invention. A central computer 150 is connected to a communications network 155. A plurality of managed server machines (computers) 160 are also connected to the communications network 155. The central computer 150 and the managed server machines 160 can include, for example, personal computers, workstations, or server machines, connected to the communications network 155 over one or more physical communications lines, via a wireless system, or any combination thereof. The communications network 155 can be one or more networks, such as local-area networks (LANs), wide-area networks (WANs), etc. employing one or more network or other communications protocols (e.g., Internet Protocol).

In one embodiment, the application management system 100 of the present invention includes a Master Server (MS) 170, which resides on the central computer 150, and at least one agent 175, which resides on a managed server machine 160. Each managed server machine 160 can function as a source server machine 135 or as a target server machine 110 depending on the management function to be performed. For example, a particular managed server machine 160 can be a source server machine 135 when it is providing a resource 130 that is already installed thereon to the application management system 100. The same managed server machine 160 can also be a target server machine 110 when it is being managed by the application management system 100 based on resource state information provided by another managed server machine 160.

The master server 170 can communicate with the agents 175 on the managed server machines 160 via the communications network 155, either directly or via some intermediary hops. The master server 170 is, in one embodiment, a program (e.g., a software package) running at the central computer 150, which is preferably a machine used by a system administrator (or other operations personnel). The master server 170 includes a user interface 180 (e.g., a graphical user interface, an application program interface) through which a user (e.g., the system administrator, a computer program) can issue commands (e.g., user input 120) for creating an application and for executing application management procedures.

In one embodiment, an instance of the agent 175 (e.g., another software package) is installed and running on each of the managed server computers 160. The managed server machines 160 are typically located in data centers and can, for example, be grouped into clusters. The system administrator or other operations personnel, for example, may be in charge of the managed server machines 160 in several physically separate data centers. The system administrator can use the application management system 100 of the embodiments of the present invention to manage applications onto any or all of the managed server machines 160, without regards to their physical location. The master server 170 can communicate with an agent 175 on a particular target server machine 110 to execute a given application management procedure.

One embodiment of the application management system 100 includes two functions, an application builder, and an application manager. The application builder assembles an application, along with its application state, based on a selection of resources for inclusion in the application. The application manager generates a set of instructions for managing the application.

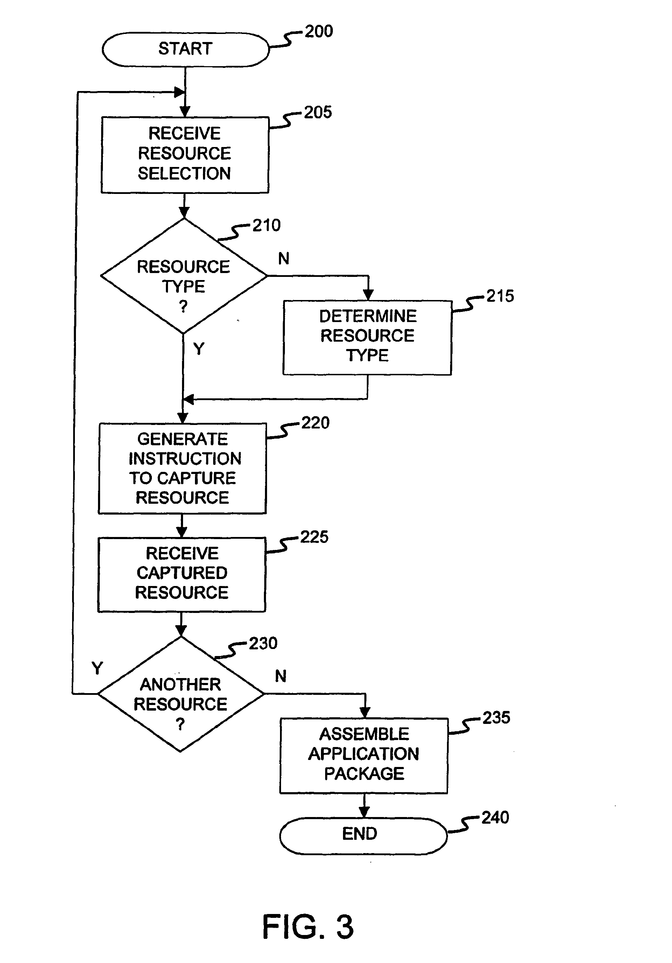

Fig. 3 illustrates a flow diagram of an embodiment of a process for creating applications in accordance with the present invention. The process starts at step 200. In step 205, the master server 170 receives (e.g., via user interface 180) a selection of a resource. The user can select the resource 130 by referencing the resource on a source server machine 135 (e.g., by designating a particular managed server machine 160, along with a location (e.g., path) of the resource 130 on the managed server machine 160; the managed server machine 160 thus acts as a source server machine 135 in this instance). In step 210, the master server 170 determines whether the user has indicated a resource type for the selected resource 130. If the user has indicated the resource type, the process continues to step 220. If not, in step 215, the master server 170 issues an instruction to an agent 175 on the designated source server machine 135 (Fig. 1) to determine the resource type. The process then continues to step 220.

In step 220, the master server 170 generates and issues instructions to the agent 175 on the source server machine 135. The instructions are based on both the resource type and the actual resource 130 selected, and are designed to perform one or more of the following: (1) capture the resource 130 on the source server machine 135, (2) capture the resource state 140 (e.g., configuration settings) associated with resource 130, and (3) transfer all the relevant data (e.g., the resource 130, the resource state 140, etc.) to the master server 170. The agent 175 on the source server machine 135 receives and executes the instructions, returning the relevant data to the master server 170. The master server 170 receives the relevant data, including the captured resource 130 in step 225.

Since any set of selected resources 130 can be designated as an application, in step 230, the master server 170 queries the user for selection of another resource 130 to be added to the application. If another resource 130 is to be added, the process returns to step 205 to receive a selection of another resource 130. If not, the process continues to step 235. In step 235, the master server 170 assembles an application package including all the selected resources 130 and the captured resource states 140 (which thus becomes the application state). The process then ends at step 240.

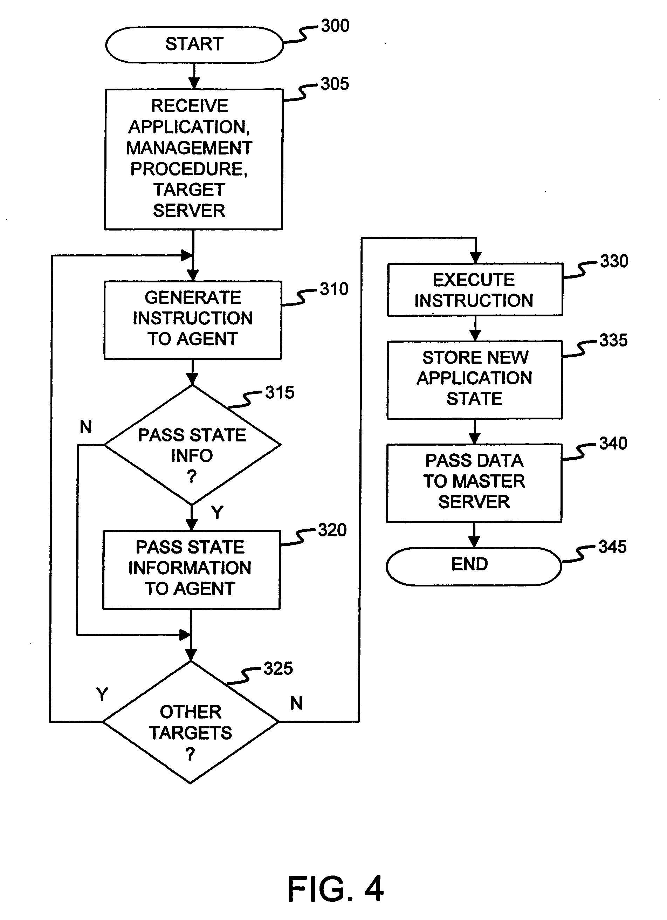

Fig. 4 illustrates a flow diagram of an embodiment of a process for managing applications in accordance with the present invention. The process starts at step 300. In step 305, the master server 170 receives (e.g., via user interface 180) a selection of an application, a management procedure, and one or more managed server machines 160 on which to execute the selected management procedure. The selected managed server machines 160 are thus target server machines 110 in this instance. In step 310, the master server 170 generates and issues instructions to an agent 175 on one of the target server machines 110. The instructions are based on both the resource type and the actual resource(s) forming the application, and are designed for the agent 175 on the target server machine 110 to execute the selected management procedure on the selected application. The instructions can also be based on the current application state. For example, many management procedures, including the un-installation and analysis procedures, can use the state information created by the previous execution of a management procedure (for the same application) as input.

In step 315, the master server 170 determines whether the management procedure is of a type requiring the application package and application state to be passed to the agent 175 (e.g., management procedures such as deploy, upgrade). If so, in step 320, the master server 170 passes the application package and application state to the agent 175, and the process continues to step 325. Otherwise, the process continues directly from step 315 to step 325. In step 325, the master server 170 determines whether there are remaining target server machines 110 requiring instructions to be generated. If so, the process returns to step 310. Otherwise, the process continues to step 330.

In step 330, the agent 175 receives and executes the instructions to perform the selected management procedure on the selected application. Then, in step 335, the agent 175 stores the new application state resulting from the execution of the management procedure on the target server machine 110. In one embodiment, the agent 175 can store a series of application states for a particular application to enable, for example, rollback to a previous version of the application. In step 340, the agent 175 passes any required data resulting from the execution of the management procedure to the master server 170. For example, the new application state can be passed to the master server 170 for redundant storage, or may be passed to the master server 170 as part of a result from the execution of a management procedure (e.g., a management procedure such as discovery may require that the state of the application be passed back to the master server 170). The process then ends at step 345.

Resource type information (corresponding to a resource) can be used in creating and in managing applications. In one embodiment, the resource type is extensible, such that the set of resource types that are recognized by the application management system 100 can be extended to include new resource types without requiring any changes to the application management system 100 itself, but rather by simply adding information regarding the new resource types to the models of management procedures. The application management system 100 can then automatically make this new information available system wide (e.g. to the relevant agents 175).

Additionally, the set of management procedures offered for each resource type can be extended without changing the application management system 100 itself, but rather by simply adding new models for the new management procedures. The application management system 100 can then automatically make this new information available system wide (e.g. to the relevant agents 175).

In one embodiment, the application management system 100 of the present invention can be customized. For example, the management procedures associated with an existing resource type can be modified without changing the application management system 100 itself, but rather, by changing the model of the management procedures. The application management system 100 can then automatically make this new information available system wide (e.g. to the relevant agents 175).

Further, the set of available management procedures can be customized for each resource type. The application management system 100 can then automatically make this new information available system wide (e.g. to the relevant agents 175).

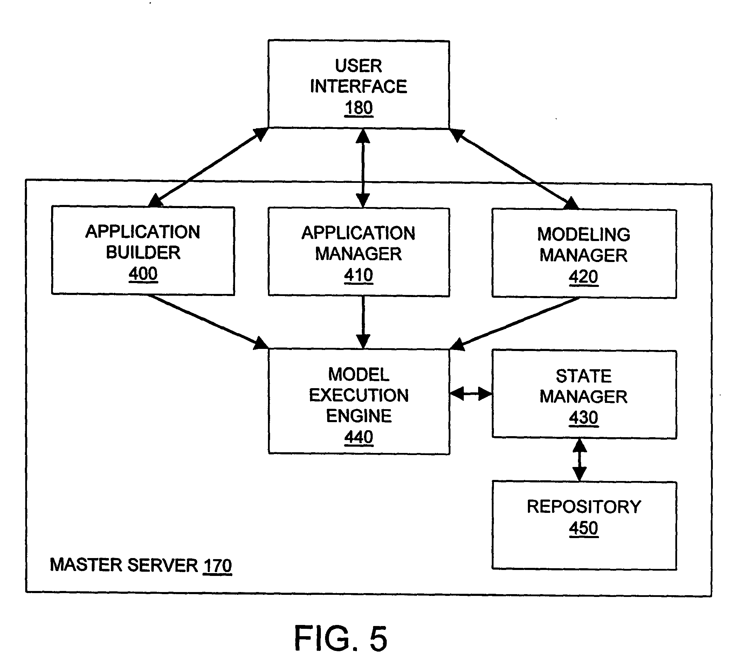

Fig. 5 illustrates a block diagram of a plurality of internal modules of an embodiment of a master server 170 in accordance with the present invention. The master server 170 includes a plurality of modules, which interact with a user to create an application, execute a management procedure, and extend the capabilities of the application management system 100. In the illustrated embodiment, the master server 170 includes an application builder 400, an application manager 410, a modeling manager 420, a state manager 430, and a model execution engine 440.

Additionally, the master server 170 can include a repository 450, which, in conjunction with the state manager 430, provides version-controlled central storage for managed resources, configuration and registration settings, etc. Of course, the repository 450 is not required to be included as a part of the master server 170. In one embodiment, the repository 450 is located on storage media accessible to a computer on which the master server 170 resides (e.g., the central computer 150). The master server 170 can thus access the contents of the repository 450 as required.

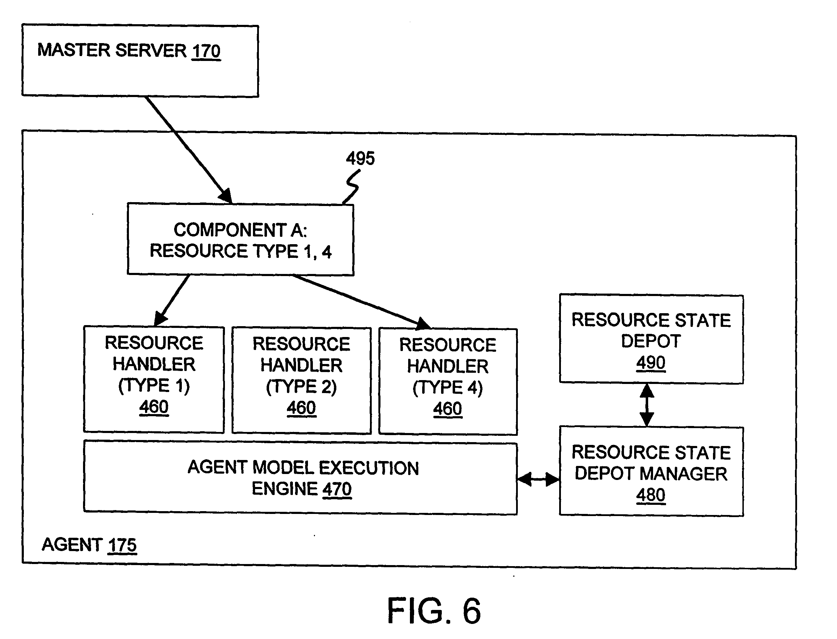

Fig. 6 illustrates a block diagram of a plurality of internal modules of an embodiment of an agent 175 in accordance with the present invention. The agent 175 includes a plurality of modules, which interact with the master server 170 to perform the required operations on the managed server machines. In the illustrated embodiment, the agent 175 includes a plurality of resource handler modules 460 and an agent model execution engine 470. Additionally, the agent 175 can include a resource state depot manager 480, which controls a resource state depot 490 to provide version-controlled storage of files and directories representing the state of a deployed resource 130. The master server 170 can utilize the resource state depot 490 associated with each agent 175 in place of or in addition to the repository 450.

In the illustrated embodiment, the agent 175 includes resource handlers 460 for handling resources 130 of resource types 1, 2, and 4. A component "component A" 495 having resources of types 1 and 4 can therefore be successfully operated on by the agent 175. The application management system 100 can be extensible, however, such that the agent 175 can gain the capability to handle new resource types without requiring extensive changes to the agent model execution engine 470. Rather, new resource handlers 460 can simply be provided to the agent 175 by, for example, the master server 170. For example, if the agent 175 is required to operate on a component having resources of types 1, 2 and 3, a resource handler 460 that is capable of handling resources of type 3 can be provided to the agent 175 by the master server 170. In one embodiment, the modeling manager 420 is configured to receive new resource handlers and to provide the resource handlers to the agents 175. The resource handlers 460 may be designed to operate only with certain operating systems. If so, the modeling manager 420 can provide such resource handlers 460 only to agents 175 running on managed server machines 160 having the corresponding operating system.

With reference to Figs. 5 and 6, each of the application builder 400, application manager 410, modeling manager 420, and state manager 430 modules calls the model execution engine 440, which is responsible for the execution of the application creation and management processes. In one embodiment, the model execution engine 440 is capable of performing the following functions: resource capture from a source server machine, application deployment to a set of target server machines, and analysis of an application deployed on a target server machine.

Resource Capture: Depending on the resource type, the model execution engine 440 can capture a resource state from a selected source server machine 135 by reading the entire resource state 140 on the selected source server machine 135 and converting it (if necessary) into, for example, a file having a particular file format. In one embodiment, the file format is independent of a file system or operating system of the source server machine 135. In another embodiment, the resource state is converted into entries in a database. Alternatively, only a portion of the resource state 140 which is relevant to a specific management procedure need be captured. The file can then be stored in the repository 450. For example, for a resource having resource type "IIS Web application," the model execution engine 440 can read a particular part of the IIS metabase (a configuration database of the IIS Web server) and convert the content thereof into an XML file.

In one embodiment, the model execution engine 440 can generate instructions to an agent 175 on the selected source server machine 135. The agent model execution engine 470 can then execute the instructions to read the resource state, convert it to a particular format (if necessary) and transfer the resulting state information to the master server 170 for storage in the repository 450.

Deployment: The model execution engine 440 can also be used to deploy an application onto a set of target server machines 110. To deploy the application, the model execution engine 440 uses the configuration information from, for example, a file indicating the resource state, to provide values for configuring the server. For example, the XML file for the resource type "IIS Web application" discussed above can be read and have its values inserted as configuration values into the IIS metabase on the target server machines 110. Further, the model execution engine 440 can capture the resource state after deployment and store it in the resource state depot 490 on the respective target server machines 110. The resource state can also be stored in the repository 450 on the master server 170 (e.g., central computer 150).

In one embodiment, the model execution engine 440 can generate instructions to an agent 175 on the target server machine 110. The agent model execution engine 470 can then execute the instructions to deploy the application on the target server machine 110. The instructions can include, for example, instructions to configure the target server machine 110 based on the captured resource state(s) of the resource(s) to be deployed. The instructions can further include instructions to capture the resource state after deployment and to store the resulting resource state in the resource state depot 490 on the target server machine 110, and/or to transfer the resulting state information to the master server 170.

Analysis: The model execution engine 440 can additionally be used to analyze a deployed application. The current resource state for each resource can be captured and compared to the resource state at a previous time (the previous resource state can be stored in the resource state depot 490 on the target server machine 110) or to a current resource state on a different managed server machine 160 (after capturing that state as well).

In one embodiment, the model execution engine 440 can generate instructions to an agent 175 on the target server machine 110. The agent model execution engine 470 can then execute the instructions to analyze the application on the target server machine 110. For example, the instructions can include instructions to capture the current resource state for each resource selected and to return the current resource state to the master server 170. The instructions can further include instructions for comparing the current resource state (for a selected resource) with a previously existing resource state. The previously existing resource state can, in one embodiment, be stored in a resource state depot 490 on the target server machine 110.

In one embodiment, the master server 170 can be implemented using a modeling layer, which includes software for performing resource type-specific management, and a second software layer, which interprets and executes the processes provided by the modeling layer. Objects of the model can capture both an application (including all of its resources, and references to management procedures), and the set of management procedures associated with each resource type.

The modeling layer can include an application model, a resource handler, and a resource type table. The application model is a model that is capable of describing any application managed by the application management system 100 and the management procedures associated with such an application. In one embodiment, the model can include references to all the resources of an application, along with the captured resource state information. An application component is a complete model of an application. The application builder 400 can generate a component from the resources selected by a user and can insert references to all the configuration information (e.g., configuration files) generated as part of the resource state capture. Alternatively, only portions of the configuration information relevant to a specific management procedure need be referenced.

A resource handler defines the actual behavior of a resource 130 of a given type. In one embodiment, a resource handler 460 encapsulates a number of management procedures, such as capture, deploy, uninstall, discover, analyze, etc. for a particular resource type. The resource handler 460 can also be implemented as a component. These components or "system services," however, are generally provided bundled with the application management system 100, as opposed to application components, which are generally created by the user via the application builder 400. A system service may have its own resources, which are implementations (e.g., scripts, Java classes) of modeled management procedures for a supported resource type. These procedures can be accessible by other components being deployed onto the same target server machine. Parameters can thus be passed when these procedures are called.

A resource type table can be implemented, in one embodiment, as a data structure such as a look-up table that associates a resource handler with a resource type.

A component is a model object that can be used to represent both applications and resource handlers. In one embodiment, a component can be expressed via an XML element named *component.* The XML element *component* can have one or more XML attributes, such as, *Name, SoftwareVersion,* and *Target Platforms.* The attribute *Name* refers to the name of the component. The attribute *SoftwareVersion* refers to a version description of the component. The attribute *Target Platforms* refers to a set of OS platforms on which this component can be installed.

The XML element *component* can also include a plurality of XML child elements, such as, *ResourceList, ControlList, InstallStep, UninstallStep,* and *Discovery.* The element *ResourceList* can have zero, one, or more XML child elements of its own, of the type *Resource.* An XML element of the type *Resource* can be a reference to a resource of the application (e.g., a binary file, a configuration file, a directory, a Web page) or a resource of the resource handler (e.g., a script, a Java class). In one embodiment, elements of the type *Resource* can have one or more XML attributes, such as, *ResourceName, InstallPath,* and *InstallPermission.* The attribute *ResourceName* can be a string with the name and directory path of a resource in the repository 450 of the master server 170. The attribute *InstallPath* can be a string with the name and path of the resource once it is deployed. The attribute *InstallPermission* can refer to the access permission of the resource once it is deployed.

The element *ControlList* can have one or more XML child elements of the type *Control* or *Capture-Control.* In one embodiment, elements of the type *Control* defme a control service for the *component* and can have one or more XML attributes and/or XML child elements, such as, *Name* (an attribute, which is a name of the control service), *ParameterList* (a child element), and *Plansteps* (a child element). Elements of the type *Capture-Control* define a capture control service for the *component* and can have one or more XML attributes and/or child elements, such as, *ParameterList* (a child element), *Prepare* (a child element having child elements of its own including *Plan step list), Capture* (a child element listing files and directories to be captured), and *Cleanup* (a child element having child elements of its own including *Plan step list).*

The element *InstallStep* can have one or more XML attributes and/or XML child elements, such as, *ParameterList* (a child element), *Plan step list* (a child element). The element *UninstallStep* can have one or more XML child elements, such as, *ParameterList,* and *Plan step list.*

In one embodiment, a parameter list can be described by an XML element named *ParameterList.* The element *ParameterList* can have one or more XML attributes and/or XML child elements, such as *Param,* which in turn has an attribute *Name* (referring to a name of the parameter) and an element *Default* (referring to a default value of the parameter).

In one embodiment, a plan step list can be described by an XML element named *Plan step list.* The element *Plan step list* can include one or more XML child elements, such as *DeployResources, UndeployResources, ExecNative, ExecJava, Call, CopyFile,* and *CheckDependency.* The element *DeployResources* deploys the resources of the component which contains the element. The deployment is performed by invoking the appropriate resource handlers 460 for each resource type of the corresponding resources 130 and using the XML attributes of the component (e.g., *ResourceName, InstallPath, InstallPermission)* as parameters. The element *UndeployResources* un-installs the application (i.e., all of its resources) of the component which contains the element.

The element *ExecNative* allows for the execution of an arbitrary command on the target server machine. In one embodiment, the element *ExecNative* includes one or more XML attributes, such as *Command, SuccessMatch,* and *MatchSource.* The attribute *Command* can be a string referencing a command (e.g., an executable or shell command) to be executed. The attribute *SuccessMatch* can be an expression used to verify the output of the executed command. The attribute *MatchSource* can be a source of the command output.

The element *ExecJava* allows for the execution of a Java program by an agent on the target server machine. In one embodiment, the element *ExecJava* can include an XML child attribute, such as *ClassName,* which indicates the Java program to be executed. The element *Call* invokes a control service of another component deployed on the same target server machine. In one embodiment, the element *Call* can include one or more XML attributes and/or XML child elements, such as, *Name, ComponentName,* and *ArgList.* The attribute *Name* refers to a name of a control service of the other component. The attribute *ComponentName* refers to a name of the other component. The attribute *ArgList* refers to a list of arguments for the control service.

The element *CopyFile* allows for one or more files on the target server machine to be copied or moved. In one embodiment, the element *CopyFile* can include XML attributes, such as *Source* (indicating one or more pathnames of one or more files to be copied), and *Destination* (indicating one or more pathnames of the directory or folder into which the files are to be copied).

The element *CheckDependency* determines whether another component is installed on the target server machine. In one embodiment, the element *CheckDependency* can include XML attributes, such as, *ComponentName, ComponentVersion, InstallPath,* and *BooleanDependency.* The attribute *ComponentName* refers to a name of the component XML element to check for dependency. The attribute *ComponentVersion* refers to a version of the component XML element to check for dependency. The attribute *InstallPath* refers to an installation path of the corresponding component. The attribute *BooleanDependency* refers to a relationship to a version of the installed component, (e.g., equal, greater_than, greater_than_equal).

In one embodiment, the application management system 100 contains an XML Schema for the XML elements *component* and *Plan step list.* An XML Schema is a standardized way of defining the required XML sub-elements, attributes and data-types of an XML element.

In one embodiment of the present invention, at least one resource handler exists for each resource type supported by the application management system (i.e., each resource type offered to the user). The resource handler encapsulates all the management procedures available for that resource type. A resource handler can be modeled by an XML element *component.* In one embodiment, a component modeling a resource handler is called a system service (in contrast to components that model applications). A system service generally includes an XML child element *ControlList,* which in turn can include an XML child element *Control* for each management procedure (e.g., deploy, un-install) offered in conjunction with this resource type and an XML child element *Capture-Control* which manages the resource state for each management procedure (and consequently, the analysis management procedure).

The control element for a particular management procedure can directly or indirectly contain XML elements representing plan steps for realizing the management procedure. If, for example, any of the plan steps are of the type *ExecNative* or *ExecJava,* then the corresponding script or Java program is modeled and referenced by the XML element *Resource.* The application management system can deploy resource handlers onto target server machines in the same way an application is deployed. This deploys the resources of the resource handler (scripts and Java programs belonging to the application management system) onto the target server machine and makes the management procedures for the corresponding resource type available on the target server machine. Consequently, the application management system needs to deploy a resource handler on a target server machine before it can manage an application having a resource having that resource type.

Referring to Fig. 5, the application builder 400 receives (e.g., from a user) one or more references to resources 130 (and, possibly, the corresponding resource types). For each resource selected (i.e., each reference received), the application builder 400 invokes a Resource Capture management procedure of the model execution engine 440, passing the reference to the selected resource (and the corresponding resource type) as input. The application builder 400 receives the selected resource (and its attributes and resource state, which can be captured in a collection of files) and places the resource (and its attributes and resource state) into the repository 450. The application builder 400 can then create an application component that references all the resources selected for inclusion in the application.

To create the application component, the application builder 400 creates an *component* XML element having, among other things, an XML header and a resource list (XML element *ResourceList*). Then, for each resource, the application builder 400 adds a *Resource* XML child element to the XML element *ResourceList.* The application builder 400 can derive the attributes *InstallPath* and *InstallPermission* (of *Resource)* from the resource attributes. The application builder 400 can add an *InstallStep* XML child element and a *DeployResources* plan step (as an XML child element). The application builder 400 can also add an *UnInstallStep* XML child element and a *UndeployResources* plan step (as an XML child element). The application builder 400 can further add a *Discovery* XML child element.

The user can further customize the resulting application component by inserting additional XML child elements into the component. For example, additional plan steps can be added to the *InstallStep* element of the application component to model the deployment behavior of the application as a whole, rather than for each of its resources.

The application manager 410 receives as input (e.g., from a user) a reference to an application, a management procedure, and a set of target servers. The application manager 410 retrieves the application component (corresponding to the referenced application) from the repository 450. The application manager 410 then calls the model execution engine 440 to execute the selected management procedure. The call to the model execution engine 440 can include, for example, the following parameters: the *component* XML element corresponding to the application, the type of management procedure to be performed, and the set of target server machines 110 selected for application management.

The model execution engine 440 receives as input one or more of the following: (1) the type of management procedure to be performed, (2) a *component* XML element corresponding to an application, (3) a designation of a resource and/or resource type, (4) a set of source server machines from which to retrieve resources and resource states, and (5) a set of target server machines on which to perform management operations.

In one embodiment of the present invention, the model execution engine 440 can be embodied in a main program and a plurality of sub-routines. In one embodiment, the main program is capable of performing the following functions for each target server machine. For each resource type (whether received via direct input or referenced by a *component),* the main program determines the corresponding resource handler by via a lookup in the resource type table. The main program can determine whether the resource handler is already installed on the target server machine by interacting with the agent on the target server machine. If the resource handler is not installed, and if the XML attribute *targetPlatforms* includes the platform of the target server machine, then the main program calls an *execute_InstallStep* sub-routine using the resource handler XML component as input. This procedure will thus ensure that the agent on the target server machine is fully equipped to manage the application.

If the selected management procedure is "deploy," the main program calls the *execute_InstallStep* sub-routine using the application component and the target server machine as input. The main program can also call an *execute_Snapshot* sub-routine using the application component and the target server as input. This sub-routine call ensures that the state of the application is captured right after deployment. This post-deployment state can later be accessed by other management procedures as may be required.

Alternatively, if the management procedure is "uninstall," the main program calls an *execute_UnInstallStep* sub-routine with the application component and the target server machine as input. If the management procedure is "analyze," the main program calls an *execute_Analysis* sub-routine with the application component and the target server machine as input. If the management procedure is "capture," the main program calls an *execute_Capture* sub-routine with the resource type and the target server machine as input.

In one embodiment, the *execute_InstallStep* sub-routine is capable of performing the following functions for each plan step in the XML element *InstallSteps.* If the plan step is *DeployResources* then, for each XML child element *Resource* of the *component, the execute_InstallStep* sub-routine can (1) fetch the resource and its attributes from the repository 450, (2) determine the type of the resource (which is then stored as a resource attribute), and/or (3) determine the corresponding resource handler via a lookup in the resource type table. The *execute_Installstep* sub-routine can then use the selected resource handler 490 as follows: by parsing the XML element *Control* (with the name "deploy"), and for each plan step in this XML element, calling the *execute_Plan_Step* subroutine using the target server machine as an input. For plan steps other than *DeployResources,* the *execute_InstallStep* sub-routine can call the *execute_Plan_Step* subroutine.

In one embodiment, the *execute_Snapshot* sub-routine is capable of performing the following functions for each *Resource* XML child element of the *component.* The *execute_Snapshot* sub-routine can determine the type of resource (e.g., the resource type is stored in the repository 450 as an attribute of the resource) and/or the corresponding resource handler (via a lookup in the resource type table).

Additionally, the *execute_Snapshot* sub-routine can perform the following functions for each plan step of the *Capture-Control* XML element of the resource handler. For each plan step of the XML element *Prepare,* the *execute _Snapshot* sub-routine calls the *execute_Plan_Step* subroutine using the target server machine as input. This plan step can, for example, transform configuration information that is stored in a database-like structure (e.g., a Microsoft IIS metabase, a database) into a file format that is accessible by the XML plan step *Capture.* The *execute_Plan_Step* subroutine can call *a create_state* sub-routine of a Resource State Depot Manager, which is running on an agent at the target server machine, using the resource name as input. The *execute_Plan_Step* subroutine can also call an *add_to _state* sub-routine of the Resource State Depot Manager for each file and directory that is referenced in the XML plan step *Capture.* For each plan step of the XML element *Cleanup,* the *execute_Snapshot* sub-routine can call the *execute_Plan_Step* subroutine using the target server machine as input. For example, a file created in the *Prepare* plan step can be removed here.

In one embodiment, the *execute_UnInstallStep* sub-routine is capable of performing the following functions for each plan step in the XML element *UninstallStep.* If the plan step is *UndeployResources* then, for each XML child element *Resource* of the *component,* the *execute_UnInstallStep* sub-routine can call a *retrieve_state_information* sub-routine of the Resource State Depot Manager 480 to retrieve resource state information and can determine the resource type of the resource (which is stored as an attribute of the resource) and/or the corresponding resource handler (via a lookup in the resource type table). Further, the *execute_UnInstallStep* sub-routine can use the resource handler 490 as follows: for each plan step of the XML element *Control* (with the name "un-install"), the *execute_UnInstallStep* sub-routine can call the *execute_Plan_Step* sub-routine, using the target server machine and/or the state information as input. In one embodiment, the input information can be presented within the XML element *ParameterList.* Alternatively, for any plan step other than the *UndeployResources* plan step, the *execute_UnInstallStep* sub-routine can call the *execute_Plan_Step* sub-routine.

In one embodiment, the *execute_Analysis* sub-routine is capable of performing the following functions for each *Resource* XML child element of the *component.* The *execute_Analysis* sub-routine can determine the type of resource (which is stored as an attribute of the resource) and/or the corresponding resource handler (via a lookup in the resource type table). The *execute_Analysis* sub-routine can further retrieve data from the Resource State Depot Manager, which is running on an agent at the target server machine, using a reference to the resource as input. This process can result in, for example, a set of files and directories. The *execute_Analysis* sub-routine can also call the *execute_Snapshot* sub-routine, which can provide an update to the record of each resource of the application.

Additionally, the *execute_Analysis* sub-routine can perform the following functions for each *Resource* XML child element of the *component.* The *execute_Analysis* sub-routine can call the *retrieve_state* sub-routine from the Resource State Depot Manager, using the resource name as input. This process can result in, for example, a set of files and directories. Then, for each file and directory, the *execute_Analysis* sub-routine can compare the two versions and add the results of the comparison to a report.

In one embodiment, the *execute_Capture* sub-routine is capable of determining the type of resource (which is stored as an attribute of the resource) and/or the corresponding resource handler (via a lookup in the resource type table). Additionally, for each plan step of the *Capture-Control* XML element of the corresponding resource handler, the *execute_Capture* sub-routine can perform the following functions. For each XML element of the XML element *Prepare,* the *execute_Capture* sub-routine calls the *execute_Plan_Step* sub-routine, using the target server machine as input. The *execute_Capture* sub-routine can return, to the calling procedure, each file and directory referenced in the XML element *Capture.* Additionally, for each XML element of the XML element *Cleanup,* the *execute_Capture* sub-routine calls the *execute_Plan_Step* sub-routine, using the target server machine as input.

In one embodiment, the *execute_Plan_Step* sub-routine is capable of performing the following functions. The *execute_Plan_Step* sub-routine can operate on various inputs, depending on the actual plan step to be executed. For example, if the plan step is *ExecNative,* the *execute_Plan_Step* sub-routine can pass the strings of the XML attributes (e.g., *Command, SuccessMatch)* to the agent. In this example, the agent executes the *Command* attribute on a suitable command line interpreter (e.g., shell) and returns the result for executing the *SuccessMatch* evaluation. If, for example, the plan step is *ExecJava,* the *execute_Plan_Step* sub-routine can pass the strings of the XML attributes (e.g., *ClassName, InputFile)* to the agent which, in this example, executes the indicated Java program. If, for example, the plan step is *CheckDependency,* the *execute_Plan_Step* sub-routine can create instructions (e.g., file and directory manipulations) for the agent to discover whether an application exists on the managed server machine where the agent resides. The instructions can use values such as *Name, InstallPath,* etc.

In one embodiment of the present invention, the modeling manager 420 can manage the resource type table and the resource handler components. The modeling manager 420 can encapsulate methods for making the application management system of the present invention extensible and customizable. The modeling manager 420 can allow a user to invoke one or more of the following sub-routines: *add_resource_type, update_resource_type,* and *remove_resource_type.*

In one embodiment, the subroutine *add*_*resource_type* receives, as input, a resource type and a corresponding resource handler. The subroutine *add_resource _type* can add a new entry to the resource type table, using the resource type to map to the newly added resource handler. The subroutine *add_resource_type* can also add the resources of the resource handler component (e.g., script, Java programs) to the repository 450. The new resource handler can then be added to the set of active resource handlers.

In one embodiment, the subroutine *update_resource_type* receives, as input, a resource type and a corresponding resource handler. The subroutine *update_resource_type* can replace the mapping of the resource type in the resource type table to map to the new resource handler. The new resource handler is thus an "active system service," while the old resource handler is now inactive. The subroutine *update_resource_type* can also add the resources of the resource handler component (e.g., script, Java programs) to the repository 450. The subroutine *update_resource_type* can then call the main program of the model execution engine 440 using the management procedure "deploy," the new resource handler, and the set of target server machines as inputs. The subroutine *update_resource _type* can further include a managed server machine into the set of target server machines if there was a previous deployment of a resource handler for the same resource type on the managed server machine.

In one embodiment, the subroutine *remove_resource_type* receives, as input, a resource type. The subroutine *remove_resource_type* can remove the entry for the resource type from the resource type table. The subroutine *remove_resource_type* can then call the main program of the model execution engine 440 using the management procedure "uninstall," and the set of target server machines as inputs. The subroutine *remove_resource_type* can further include a managed server machine into the set of target server machines if there was a previous deployment of a resource handler for the same resource type on the managed server machine.

Referring to Fig. 6, the management procedures can, in one embodiment, store a history of the state(s) of each managed application in the resource state depot 490. A state can be stored, for example, as a collection of files. For each resource type, the state information can be a different collection of files having a given format. For example, for a resource of resource type "IIS Web application," the state information can include an XML file, which reflects the relevant configuration settings of the resource in the IIS metabase (a configuration database of the IIS Web server). Management procedures can read and change this XML file to reflect the actual configuration of the resource.

Further, the agent 175 can include a Resource State Depot Manager 480 that manages the resource state depot on the agent 175 on behalf of all the management procedures associated with the resource. In one embodiment, the Resource State Depot Manager 480 can include one or more of the following sub-routines: *create_state, add_to_state, retrieve_state_information, retrieve_state,* and *delete_state.*

In one embodiment, the subroutine *create_state* receives a resource name as input. The subroutine *create_state* can then create an empty record associated with the resource name. The subroutine *add_to_state* receives a resource name and an element name as input. The subroutine *add_to_state* can then add elements (e.g., file, directory) to the record. The subroutine *retrieve_state_information* receives a resource name as input. The subroutine *retrieve_state_information* can then return references and/or attributes of each element (e.g., file, directory) to the calling process. The subroutine *retrieve state* receives a resource name as input. The subroutine *retrieve state* can then return each element (e.g., file, directory) to the calling process. The subroutine *delete_state* receives a resource name as input. The subroutine *delete_state* can then remove the record (and all its elements) from the resource state depot 490.

An illustrative portion of a component modeling a financial application for the Microsoft Windows platform is shown in Table 1. The component (portion) includes two resources, an IIS Web application (FMStocks2000) and a COM PLUS component (FMStocks2000core). In this example, the *InstallStep* XML element contains three plan steps: (1) a call to another component's ("serviceHandler") control service named "stop," (2) a *deployResources* plan step, which in turn calls the control service "deploy" of the resource handlers for both IIS Web and COM Plus resource types, and (3) a call to another component's ("serviceHandler") control service named "stop." The first and third plan steps are the result of user customization during application building.

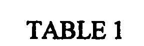

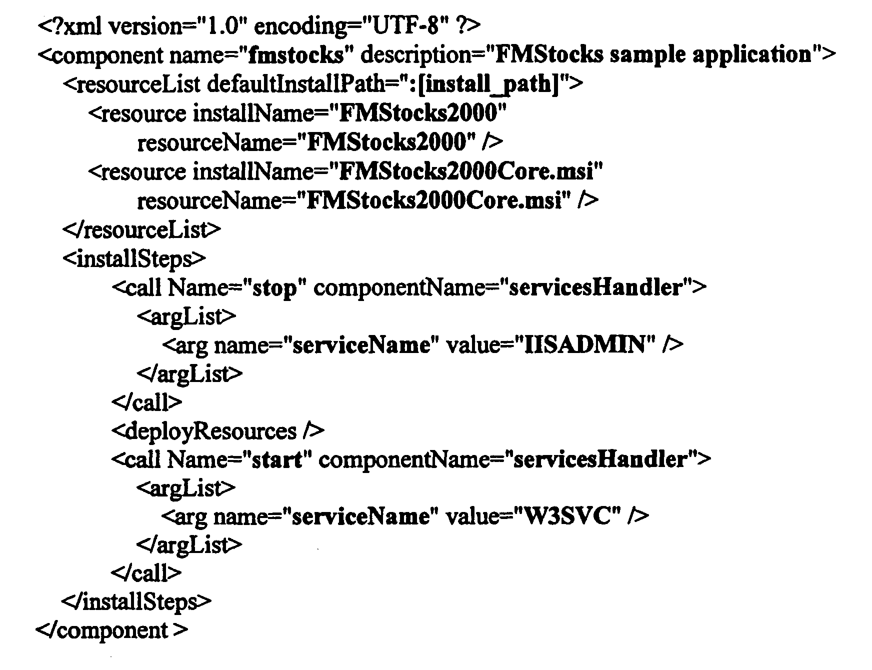

An illustrative portion of a resource handler ("system service") for the resource type "IIS Web" is shown in Table 2. The component (portion) includes one resource "meta," which is a directory of Windows Hosting scripts. The *InstallStep* XML element guides where this directory is to placed on the target server. The *controlList* XML element "install" invokes a particular script "metaImport" from a "meta" directory. In this embodiment, any resource of type "IIS Web" will have its configuration data stored in a database-like structure ("metabase") on the target server machine. This script merges the resource's configuration into the actual metabase on the target server machine. This configuration data was previously captured by the application builder during the creation of the component and stored in a well-defined format in a file, which is now read by the "metaImport" script.

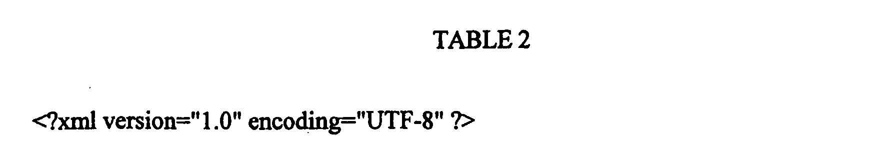

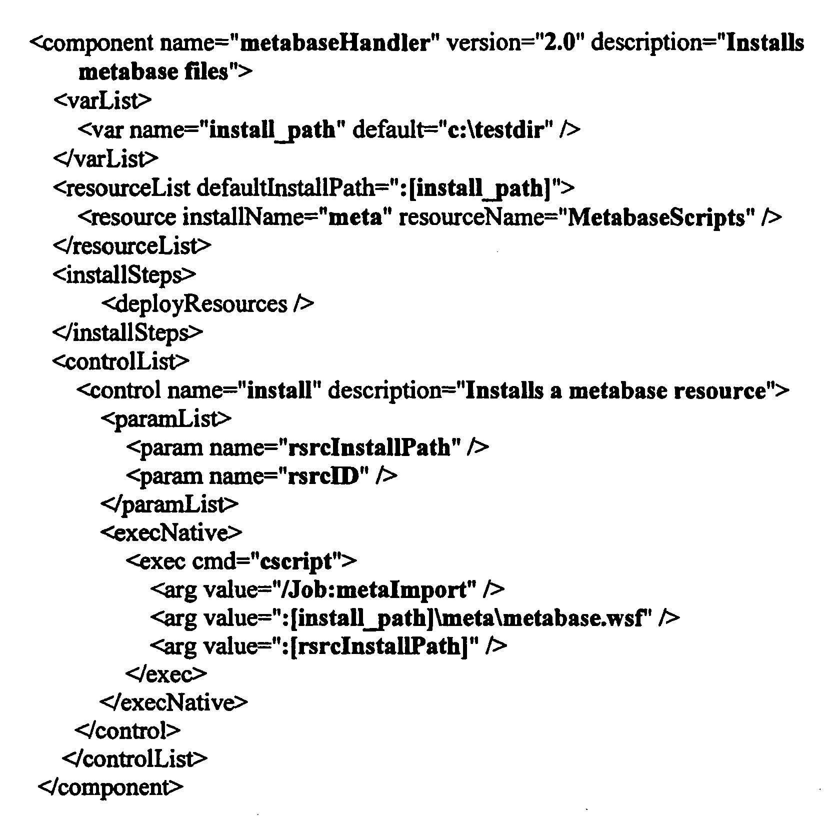

Although embodiments of the present invention have been fully described by way of examples and with reference to the accompanying drawings, it is to be understood that various changes and modifications will be apparent to those skilled in the art without departing from the spirit and scope of the invention. Therefore, unless such changes and modifications depart from the scope of the present invention, they should be construed as being included therein.

In view of the foregoing description of particular embodiments of the invention it will be appreciated by a person skilled in the art that various additions, modifications and alternatives thereto may be envisaged.

The scope of the present disclosure includes any novel feature or combination of features disclosed therein either explicitly or implicitly or any generalisation thereof irrespective of whether or not it relates to the claimed invention or mitigates any or all of the problems addressed by the present invention. The applicant hereby gives notice that new claims may be formulated to such features during the prosecution of this application or of any such further application derived therefrom. In particular, with reference to the appended claims, features from dependent claims may be combined with those of the independent claims and features from respective independent claims may be combined in any appropriate manner and not merely in the specific combinations enumerated in the claims.

Insofar as embodiments of the invention described above are implementable, at least in part, using a computer system, it will be appreciated that a computer program for implementing at least part of the described methods and/or systems, is envisaged as an aspect of the present invention. The computer system may be any suitable apparatus, system or device for providing a computing platform. For example, the computer system may be a programmable data processing apparatus, a general purpose computer, a Digital Signal Processor or a microprocessor. The computer program may be embodied as source code and undergo compilation for implementation on a computer, or may be embodied as object code, for example.

Suitably, the computer program can be stored on a carrier medium in computer usable form, which is also envisaged as an aspect of the present invention. For example, the carrier medium may be solid-state memory, optical or magneto-optical memory such as a readable and/or writable disk for example a compact disk and a digital versatile disk, or magnetic memory such as disc or tape, and the computer system can utilise the program to configure it for operation. The computer program may be supplied from a remote source embodied in a carrier medium such as an electronic signal, including radio frequency carrier wave or optical carrier wave.

## Claims

1. A method, performable by a first computer, for managing an application, the method comprising the steps of:
receiving, at said first computer, a selection of a resource from a set of available resources for inclusion in said application, wherein said resource thus selected has been deployed on a second computer;
generating, at said first computer, a set of instructions for capturing a resource state of said resource thus selected, said set of instructions based on a resource type of said resource thus selected;
providing said set of instructions to said second computer for execution thereon to capture said resource state from said second computer; and
receiving, at said first computer, said resource state from said second computer.

2. A method as recited in Claim 1, further including the step of receiving, at said first computer, a designation of a resource type of said resource thus selected.

3. A method as recited in Claim 1 or 2, further including the step of determining a resource type of said resource thus selected.

4. A method as recited in any preceding Claim, wherein said set of instructions further comprise instructions for capturing said resource from said second computer, said method further comprising the step of receiving said resource from said second computer.

5. A method as recited in any preceding Claim, further comprising the steps of:
receiving, at said first computer, a selection of a target computer for management thereof;
generating, at said first computer, a set of instructions for managing said application on said target computer based on said resource thus selected and said resource state; and
providing said set of instructions for managing said application to said target computer for execution thereon.

6. A method as recited in Claim 5, wherein said set of instructions for managing said application include instructions selected from the group consisting of:
instructions for deploying said application on said target computer;
instructions for reconfiguring said application on said target computer; and
instructions for upgrading said application on said target computer.

7. A method as recited in any preceding Claim, further comprising the step of storing said resource state on said first computer.

8. A method as recited in any preceding Claim, wherein configuration information forming said resource state is based on said resource type.

9. A method as recited in Claim 8, wherein said configuration information is independent of an operating system of said second computer.

10. A method as recited in any preceding Claim, wherein said set of instructions for capturing said resource state includes instructions for storing said resource state in at least one file, said method further comprising the step of receiving said at least one file containing said resource state from said second computer.

11. A method as recited in any preceding Claim, wherein said set of instructions for capturing said resource state includes instructions for storing said resource state in a database, said method for further comprising the step of receiving said database containing said resource state from said second computer.

12. A method as recited in any preceding Claim, further comprising the steps of:
receiving, at said first computer, a selection of a second resource from said set of available resources for inclusion in said application, wherein said second resource thus selected has been deployed on a third computer;
generating, at said first computer, a second set of instructions for capturing a resource state of said second resource thus selected, said second set of instructions based on a resource type of said second resource thus selected;
providing said second set of instructions to said third computer for execution thereon to capture said resource state of said second resource;
receiving, at said first computer, said resource state of said second resource from said third computer; and
generating, at said first computer, an application package for deploying said application to a target computer, said application package including said first and second resources thus selected and instructions for deploying said application, wherein said instructions for deploying said application are based on said resource states of said first and second resources.

13. A method a recited in any preceding Claim, further comprising the steps of:
receiving, at said first computer, a selection of a second resource from said set of available resources for inclusion in said application, wherein said second resource thus selected has been deployed on both said second computer and a third computer;
receiving, at said first computer, a selection of one of said second and third computers for resource state capture;
generating, at said first computer, a second set of instructions for capturing a resource state of said second resource thus selected, said second set of instructions based on a resource type of said second resource thus selected;
providing said second set of instructions to said one of said second and third computers thus selected for execution thereon to capture said resource state of said second resource; and
receiving, at said first computer, said resource state of said second resource from said one of said second and third computers thus selected.

14. A method as recited in Claim 13, further comprising the steps of:
receiving, at said first computer, a selection of a target computer for management thereof; and
generating, at said first computer, an application package for managing said application on a target computer, said application package including said first and second resources thus selected and instructions for managing said application, wherein said instructions are based on said resource states of said first and second resources.

15. A method as recited in Claim 14, wherein said instructions for managing said application include instructions selected from the group consisting of:
instructions for deploying said application on said target computer; instructions for reconfiguring said application on said target computer; and
instructions for upgrading said application on said target computer.

16. A method, performable by a master server, for managing an application on a target server machine connected to said master server via a communications network, the method comprising the steps of:
receiving, at said master server, a selection of a plurality of resources for inclusion in said application, wherein each of said plurality of resources thus selected has been deployed on at least one source server machine connected to said master server via said communications network;
generating, at said master server, instructions for capturing resource states corresponding to said plurality of resources thus selected, said instructions based on a resource type of each of said plurality of resources thus selected;
providing said instructions to source server machines containing at least one of said plurality of resources thus selected for execution thereon to capture said resource states;
receiving, at said master server, said resource states thus captured from said source server machines; and
generating, at said master server, an application package for deploying said application to said target server machine, said application package including said plurality of resources thus selected and instructions for deploying said application based on said resource states thus captured.

17. A method as recited in Claim 16, further comprising the step of providing said application package to said target server machine to deploy said application on said target server machine.

18. A method as recited in Claim 16 or 17, wherein said instructions for deploying said application includes instructions for configuring said target server machine.

19. A method as recited in any one of Claims 16 to 18, wherein said instructions for deploying said application includes instructions for configuring each of said plurality of resources on said target server machine.

20. A method, performable by a computer, comprising the steps of:
receiving, at said computer, a user selection of an application, said application having a resource and a corresponding resource type;
retrieving a resource state associated with said resource;
determining a set of allowable management procedures based on said resource type;
providing, for user selection, said set of allowable management procedures;
receiving, at said computer, a selection of a management procedure from said set of allowable management procedures; and
generating, at said computer, a set of instructions for performing said management procedure thus selected, said set of instructions based on said resource state and said management procedure thus selected.

21. A method as recited in Claim 20, wherein said set of instructions are further based on said resource type.

22. A method as recited in Claim 20 or 21, wherein said set of instructions includes instructions for capturing a resource state of said resource after performance of said management procedure, said method further comprising the step of receiving said resource state thus captured after said performance of said management procedure.

23. A method as recited in any one of Claims 20 to 22, further including the steps of:
receiving, at said computer, a selection of a target computer on which said application is deployed for management thereof; and
providing said set of instructions to said target computer thus selected for execution thereon to perform said management procedure thus selected;
wherein said set of instructions is further based on said target computer thus selected.

24. A method as recited in Claim 23, wherein said set of instructions include instructions for removing said application from said target computer thus selected.

25. A method as recited in Claim 23 or 24, wherein said set of instructions include instructions for determining resource states of said application on said target computer thus selected.

26. A method as recited in any one of Claims 23 or 25, wherein said set of instructions include instructions for comparing resource states of said application on said target computer thus selected.

27. A method as recited in any one of Claims 23 to 26, further including the step of providing said resource and said resource state to said target computer.

28. A method as recited in any one of Claims 20 to 27, further including the steps of:
receiving, at said computer, a selection of a plurality of target computer on which said application is deployed for management thereof, wherein said step of generating comprises the step of generating, for each of said plurality of target computers selected, a set of instructions for performing said management procedure thus selected, wherein said set of instructions is based on said resource state, said management procedure thus selected, and each of said plurality of target computers; and
providing, to each of said plurality of target computers selected, said set of instructions generated for execution thereon to perform said management procedure thus selected.

29. A method, performable by a master server, for managing an application on one or more managed server machines connected to said master server via a communications network, the method comprising the steps of:
receiving, at said master server, a selection of an application, said application having at least one resource;
generating, at said master server, instructions for determining ones of said managed server machines on which said application is deployed, said instructions based on resource types corresponding to said at least one resource; and
providing said instructions to said managed server machines for execution thereon to determine an identity of said managed server machines on which said application is deployed.

30. A method as recited in Claim 29, wherein said instructions further comprise instructions for capturing a current resource state corresponding to said at least one resource.

31. A method as recited in Claim 29 or 30, wherein said instructions further comprise instructions for determining and comparing resource states of said at least one resource deployed.

32. A computer-readable medium having instructions recorded therein, said instructions executable by a first computer for managing an application, said instructions comprising:
instructions for receiving a selection of a resource from a set of available resources for inclusion in said application, wherein said resource thus selected has been deployed on a second computer;
instructions for generating a set of instructions for capturing a resource state of said resource thus selected, said set of instructions based on a resource type of said resource thus selected;
instructions for providing said set of instructions to said second computer for execution thereon to capture said resource state from said second computer; and
instructions for receiving said resource state from said second computer.

33. A computer-readable medium as recited in Claim 32, further including instructions for receiving a designation of a resource type of said resource thus selected.

34. A computer-readable medium as recited in Claim 32 or 33, further including instructions for determining a resource type of said resource thus selected.

35. A computer-readable medium as recited in any one of Claims 32 to 34, wherein said set of instructions further comprise instructions for capturing said resource from said second computer.

36. A computer-readable medium as recited in any one of Claims 32 to 35, wherein said instructions further comprise:
instructions for receiving a selection of a target computer for management thereof;
instructions for generating a set of instructions for managing said application on a target computer based on said resource thus selected and said resource state thus received; and
instructions for providing said set of instructions for managing said application to said target computer for execution thereon.

37. A computer-readable medium as recited in Claim 36, wherein said set of instructions for managing said application include instructions selected from the group consisting of:
instructions for deploying said application on said target computer;
instructions for reconfiguring said application on said target computer; and
instructions for upgrading said application on said target computer.

38. A computer-readable medium as recited in any one of Claims 32 to 37, wherein configuration information forming said resource state is based on said resource type and is independent of an operating system of said second computer.

39. A computer-readable medium as recited in any one of Claims 32 to 38, wherein said set of instructions for capturing said resource state includes instructions for storing said resource state in at least one file.

40. A computer-readable medium as recited in any one of Claims 32 to 39, wherein said set of instructions for capturing said resource state includes instructions for storing said resource state in a database.

41. A computer-readable medium as recited in any one of Claims 32 to 40, wherein said instructions further comprise:
instructions for receiving a selection of a second resource from said set of available resources for inclusion in said application, wherein said second resource thus selected has been deployed on a third computer;
instructions for generating a second set of instructions for capturing a resource state of said second resource thus selected, said second set of instructions based on a resource type of said second resource thus selected;
instructions for providing said second set of instructions to said third computer for execution thereon to capture said resource state of said second resource from said third computer;
instructions for receiving said resource state of said second resource; and
instructions for generating an application package for deploying said application to a target computer, said application package including said first and second resources thus selected and instructions for deploying said application, wherein said instructions for deploying said application are based on said resource states of said first and second resources.

42. A computer-readable medium as recited in any one of Claims 32 to 41, wherein said instructions further comprise:
instructions for receiving a selection of a second resource from said set of available resources for inclusion in said application, wherein said second resource thus selected has been deployed on both said second computer and a third computer;
instructions for receiving a selection of one of said second and third computers for resource state capture;
instructions for generating a second set of instructions for capturing a resource state of said second resource thus selected, said second set of instructions based on a resource type of said second resource thus selected;
instructions for providing said second set of instructions to said one of said second and third computers thus selected for execution thereon to capture said resource state of said second resource; and
instructions for receiving said resource state of said second resource from said one of said second and third computers thus selected.

43. A computer-readable medium as recited in Claim 42, wherein said instructions further comprise instructions for generating an application package for deploying said application to a target computer, said application package including said first and second resources thus selected and instructions for deploying said application, wherein said instructions are based on said resource states of said first and second resources.

44. A computer-readable medium having instructions recorded therein, said instructions executable by a computer for managing an application on a target server machine connected to said computer via a communications network, said instructions comprising:
instructions for receiving a selection of a plurality of resources for inclusion in said application, wherein each of said plurality of resources thus selected has been deployed on at least one source server machine connected to said computer via said communications network;
instructions for generating a first set of instructions for capturing resource states corresponding to said plurality of resources thus selected, said first set of instructions based on a resource type of each of said plurality of resources thus selected;
instructions for providing said first set of instructions to source server machines containing at least one of said plurality of resources thus selected for execution thereon to capture said resource states;
instructions for receiving said resource states thus captured from said source server machines; and
instructions for generating an application package for deploying said application to said target server machine, said application package including said plurality of resources thus selected and a second set of instructions for deploying said application based on said resource states thus captured.

45. A computer-readable medium as recited in Claim 44, further comprising instructions for providing said application package to said target server machine to enable said target server machine to deploy said application thereon.

46. A computer-readable medium as recited in Claim 44 or 45, wherein said second set of instructions includes instructions for configuring said target server machine.

47. A computer-readable medium as recited in any one of Claims 44 to 46, wherein said second set of instructions includes instructions for configuring each of said plurality of resources on said target server machine.

48. A computer-readable medium having instructions recorded thereon, said instructions executable by a computer, said instructions comprising:
instructions for receiving a user selection of an application, said application having a resource and a corresponding resource type;
instructions for retrieving a resource state associated with said resource;
instructions for determining a set of allowable management procedures based on said resource type;
instructions for providing, for user selection, said set of allowable management procedures;
instructions for receiving a selection of a management procedure from said set of allowable management procedures; and
instructions for generating a set of instructions for performing said management procedure thus selected, said instructions based on said resource state and said management procedure thus selected.

49. A computer-readable medium as recited in Claim 48, wherein said set of instructions are further based on said resource type.

50. A computer-readable medium as recited in Claim 48 or 49, wherein said set of instructions for performing said management procedure includes instructions for capturing a resource state of said resource after performance of said management procedure.

51. A computer-readable medium as recited in any one of Claims 48 to 50, wherein said instructions further comprise:
instructions for receiving a selection of a target computer on which said application is deployed for management thereof; and
instructions for providing said set of instructions to said target computer thus selected for execution thereon to perform said management procedure thus selected;
wherein said set of instructions is further based on said target computer thus selected.

52. A computer-readable medium as recited in Claim 51, wherein said set of instructions include instructions for removing said application from said target computer.

53. A computer-readable medium as recited in Claim 51 or 52, wherein said set of instructions include instructions for determining resource states of said application on said target computer.

54. A computer-readable medium as recited in any one of Claims 51 to 53, wherein said set of instructions include instructions for comparing resource states of said application on said target computer.

55. A computer-readable medium as recited in any one of Claims 51 to 54, wherein said instructions further comprise instructions for providing said resource and said resource state of said target computer.

56. A computer-readable medium having instructions recorded therein, said instructions executable by a computer for managing an application on one or more managed server machines connected to said computer via a communications network, said instructions comprising:
instructions for receiving a selection of an application, said application having at least one resource;
instructions for generating a set of instructions for determining ones of said managed server machines on which said application is deployed, said set of instructions based on resource types corresponding to said at least one resource; and
instructions for providing said set of instructions to said managed server machines for execution thereon to determine an identity of said managed server machines on which said application is deployed.

57. A computer-readable medium as recited in Claim 56, wherein said set of instructions further comprise instructions for capturing a current resource state corresponding to said at least one resource.

58. A computer-readable medium as recited in Claim 56 or 57, wherein said set of instructions further comprise instructions for determining and comparing resource states of said at least one resource deployed.

59. An application management system for managing an application, comprising:
a master server, connected to a source server machine via a communications network, said master server including:
an application builder for receiving a selection of a resource from a set of available resources for inclusion in said application, and
a model execution engine, coupled to said application builder, for generating a set of instructions for capturing a resource state corresponding to said resource thus selected, said instructions based on a resource type of said at least one resource thus selected;
wherein said master server is adapted for providing said set of instructions to said source server machine via said communications network.

60. An application management system as recited in Claim 59, wherein said master server further comprises:
a repository for storing said resource state; and
a state manager for receiving said resource state from said source server machine and storing said resource state in said repository.

61. An application management system as recited in Claim 59 or 60, wherein said master server further comprises a modeling manager for determining a resource type of said resource thus selected and providing said resource type to said model execution engine.

62. An application management system as recited in any one of Claims 59 to 61, further comprising an agent operating on said source server machine, said agent including:
a resource handler configured for operation with a resource type, said resource handler executing portions of said set of instructions associated with said resource type, and
an agent execution engine for executing non-resource specific portions said set of instructions.

63. An application management system as recited in Claim 62, wherein said modeling manager is adapted to receive a second resource handler configured for operation with a second resource type, said modeling manager adapted to provide said second resource handler to said agent.

64. An application management system as recited in Claim 62 or 63, wherein said modeling manager is adapted to receive a second resource handler configured for operation with a second resource type;
wherein said second resource handler is configured to run on a specific operating system, said modeling manager adapted to provide said second resource handler to said agent if said agent runs on said specific operating system.

65. An application management system as recited in any one of Claims 62 to 64, wherein said set of instructions include instructions for said agent to read said resource state and to transfer said resource state to said master server.

66. An application management system as recited in any one of Claims 62 to 65, wherein said set of instructions include instructions for said agent to convert said resource state to configuration information that is independent of an operating system of said source server machine.

67. An application management system as recited in any one of Claims 62 to 66, wherein said modeling manager is adapted to provide said agent with a resource handler corresponding to each resource type selected.

68. An application management system as recited in any one of Claims 62 to 67, wherein said agent further comprises:
a resource state depot for storing resource states corresponding to resources deployed on said source server machine; and
a resource state depot manager adapted for retrieving resource state information from said resource state depot.

69. An application management system for managing an application, comprising:
a master server, connected to a plurality of source server machines via a communications network, said master server including:
an application builder for receiving a selection of a plurality of resources from a set of available resources for inclusion in said application, and
a model execution engine, coupled to said application builder, for generating a set of instructions for capturing a resource state of each of said plurality of resources thus selected, said instructions based on a resource type of each of said plurality of resource thus selected;
wherein said master server is adapted for providing, via said communications network, said set of instructions to ones of said source server machines on which at least one of said plurality of resources is deployed.

70. An application management system as recited in Claim 69, further comprising an agent operating on each of said plurality of source server machines;
wherein said model execution engine is adapted to generate an application package for managing said application on at least one target computer, said application package including said plurality of resources thus selected and instructions for managing said application, wherein said instructions are based on said resource states of each of said plurality of resources.

71. An application management system as recited in Claim 69 or 70,
wherein said instructions for managing said application include instructions selected from the group consisting of:
instructions for deploying said application on said at least one target computer;
instructions for reconfiguring said application on said at least one target computer; and
instructions for upgrading said application on said at least one target computer.

72. An application management system for managing an application on a managed server machine, comprising:
a master server, connected to said managed server machine via a communications network, said master server including:
an application manager for receiving a selection of an application, said application having a resource and a corresponding resource type, said application manager providing, for user selection, a set of available management procedures and receiving from said user a selected management procedure, and
a model execution engine, coupled to said application manager, for generating instructions for performing said selected management procedure, said instructions based on a resource state of said resource;
wherein said master server is adapted for providing said instructions to said managed server machine via said communications network.

73. An application management system as recited in Claim 72, wherein said master server further comprises a repository for storing said resource state and a state manager for controlling said repository.

74. An application management system as recited in Claim 72 or 73, wherein said model execution engine is further adapted for generating a set of instructions for managing said application on a target computer based on said resource thus selected and said resource state.

75. An application management system as recited in Claim 74, wherein said instructions for managing said application include instructions selected from the group consisting of:
instructions for deploying said application on said target computer;
instructions for reconfiguring said application on said target computer; and
instructions for upgrading said application on said target computer.

76. An application management system as recited in any one of Claims 72 to 75, wherein said set of available management procedures is based on said resource type.

77. An application management system as recited in Claim 76, wherein management procedures in said set of available management procedures can be modified by changing a model of said resource.

78. A computer program for implementing at least part of the method of any one of Claims 1 to 31 and/or for implementing at least part of the application management system of any one of Claims 59 to 77.
